(19) Europäisches Patentamt
European Patent Office
Office européen des brevets

(11) **EP 2 099 596 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**05.09.2018 Patentblatt 2018/36**

(45) Hinweis auf die Patenterteilung:
**05.09.2012 Patentblatt 2012/36**

(21) Anmeldenummer: **07866214.5**

(22) Anmeldetag: **06.12.2007**

(51) Int Cl.:
**B29C 33/02** *(2006.01)*     **B29C 33/40** *(2006.01)*
**B29C 70/88** *(2006.01)*

(86) Internationale Anmeldenummer:
**PCT/DE2007/002219**

(87) Internationale Veröffentlichungsnummer:
**WO 2008/067809 (12.06.2008 Gazette 2008/24)**

(54) **FORMWERKZEUG FÜR DIE URFORMENDE ODER UMFORMENDE FORMGEBUNG VON BAUTEILEN AUS THERMISCH BEEINFLUSSBAREN WERKSTOFFEN**

MOULD TOOL FOR THE PRIMARY MOULDING OR REMOULDING OF COMPONENTS MADE FROM THERMALLY INFLUENCEABLE MATERIALS

MOULE POUR LE MODELAGE PRIMAIRE OU SECONDAIRE DE PIÈCES EN MATÉRIAUX THERMIQUEMENT INFLUENÇABLES

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**HR**

(30) Priorität: **07.12.2006 DE 102006058198**

(43) Veröffentlichungstag der Anmeldung:
**16.09.2009 Patentblatt 2009/38**

(73) Patentinhaber: **fibretemp GmbH & Co. KG**
**28719 Bremen (DE)**

(72) Erfinder:
• **FUNKE, Herbert**
**33378 Rheda-Wiedenbrück (DE)**
• **BRANDES, Jens**
**28717 Bremen (DE)**
• **MEYER, Jan**
**28719 Bremen (DE)**

(74) Vertreter: **Würmser, Julian et al**
**Meissner Bolte Patentanwälte**
**Rechtsanwälte Partnerschaft mbB**
**Postfach 86 06 24**
**81633 München (DE)**

(56) Entgegenhaltungen:
| | |
|---|---|
| EP-A- 0 164 259 | EP-A- 0 218 038 |
| EP-A2- 0 038 922 | WO-A-00/54949 |
| DE-A1-102004 042 422 | FR-A- 2 691 400 |

• '"Entwicklung beheizbarerleichtgewichtsformen"' STUDIENARBEIT VON J. BRANDES UND I. GEBAUER 1996,

**Beschreibung**

Die Erfindung betrifft ein Formwerkzeug für die urformende oder umformende Formgebung von Bauteilen aus thermisch beeinflussbaren Werkstoffen gemäß Oberbegriff des Anspruches 1.

Faserverstärkte Kunststoffe gewinnen in vielen Bereichen der Fahrzeugtechnik immer mehr an Bedeutung. Typische Beispiele für langfaserverstärkte Kunststoffkonstruktionen sind Anbauteile bei Pkw (z.B. Spoiler), großflächige Karosserieelemente bei Schienen und Nutzfahrzeugen, Bootsrümpfe vom kleinen Kajak bis zur großen Yacht, sowie Rotoren von Windkrafträdern. In der Luftfahrt und im Rennsport (z. B. in der Formel 1) bestehen Strukturen aufgrund ihrer herausragenden gewichtsspezifischen Eigenschaften inzwischen zu einem Großteil aus langfaserverstärkten Kunststoffen. Ein ganz wesentlicher Vorteil der faserverstärkten Kunststoffe sind neben ihren guten gewichtsbezogenen mechanischen Eigenschaften die nahezu uneingeschränkte Gestaltungsfreiheit sowie die Möglichkeit, Bauteile in fast beliebiger Größe auch in kleinen bis mittleren Stückzahlen mit vergleichsweise geringen Investitionskosten herstellen zu können.

Daher werden faserverstärkte Kunststoffe bislang vorzugsweise in kleinen bis mittleren Serien sowie im Prototypenbau eingesetzt. Insbesondere langfaserverstärkte Faserverbund-Kunststoffbauteile, die vorzugsweise mit duroplastischen Kunststoffen hergestellt werden, erfordern aufgrund der Härtungszeiten des Kunststoffes lange Verweilzeiten in der Form, was lange Zykluszeiten zur Folge hat und die Großserientauglichkeit solcher Bauteile stark einschränkt.

Um die Wirtschaftlichkeit hier zu erhöhen, werden entsprechende Formen, die gerade bei großen Bauteilen meistens ebenfalls aus faserverstärktem Kunststoff bestehen, beheizt. Eine gezielte Temperaturführung bei der Bauteilherstellung unterstützt durch Absenkung der Harzviskosität die Tränkung der Fasern und beschleunigt insbesondere die Aushärtung der duroplastischen Kunststoffe erheblich. Außerdem wird durch Temperaturzuführung der Vernetzungsgrad der Duroplaste gesteigert, so dass für qualitativ hochwertige Bauteile ein sog. Tempern unerlässlich ist. Dieses Tempern ist je nach verwendetem Kunststoffsystem für Bauteile, die in der Luftfahrt eingesetzt werden, sogar vorgeschrieben.

Formen für die Herstellung von Werkstücken zu beheizen ist im Werkzeugbau üblich und erfolgt bei metallischen Formen in der Regel als Flüssigkeitsheizung oder als elektrische Widerstandsheizung. In beiden Fällen garantiert die hohe Wärmeleitfähigkeit der Metallform eine gleichmäßige homogene Temperaturverteilung des Formenwerkzeuges.

Allerdings sind metallische Formen sehr teuer. Für sehr große Bauteile sind Metallformen, besonders wenn diese Bauteile in nur geringen Stückzahlen hergestellt werden, unwirtschaftlich. Daher werden entsprechende Faserverbundbauteile wie oben aufgeführt häufig in Kunststoffformen hergestellt, die sehr viel kostengünstiger als metallische Formen sind und noch eine ausreichende Anzahl an Entformungen gewährleisten. In Kunststoffformen sind mindestens 100 Entformungen pro Form üblich, bei entsprechendem Formenaufbau sind über 1000 Entformungen pro Form erreichbar. Metallische Formen ermöglichen demgegenüber ein Vielfaches an Entformungen ohne Nachbearbeitung der Form, erfordern aber auch einen entsprechend höheren Investitionsaufwand.

Problematisch ist die Beheizung entsprechender Kunststoffformen, da der Kunststoff eine wesentlich geringere Wärmeleitfähigkeit als Metalle aufweist und zudem, insbesondere bei ungleichmäßiger Wärmeverteilung der Form, sehr verzugsanfällig ist. Dieses ist für Bauteile mit hohen Genauigkeitsanforderungen an Formtreue und Maßhaltigkeit problematisch. Aus diesem Grund konnten sich Kunststoffformen, die mit Wasser beheizt wurden, nicht in breiter Anwendung durchsetzen. Im Allgemeinen ist für kunststoffverarbeitende Betriebe, die entsprechende Bauteile herstellen, ein separater Temperraum erforderlich. Nach der Herstellung werden Formen mit den Bauteilen zum Aushärten und Tempern in den Temperraum gebracht.

Es ist insbesondere bei Metallformen bekannt, dass Formen über Flüssigkeiten beheizt werden können. Dabei sind die Formen mit einem auf unterschiedliche Weise gestalteten Flüssigkeitskanalsystem ausgestattet, durch das entsprechend temperierte Flüssigkeiten gefördert werden. Das Kanalsystem heizt die Form dabei in einem gewissen Abstand von der eigentlich zu beheizenden Oberfläche. Bei Formenwerkstoffen mit guter Wärmeleitfähigkeit ist dieses jedoch unproblematisch. Bei Formenwerkstoffen mit geringer Wärmeleitfähigkeit, wie z.B. bei Kunststoffformen führt die geringe Wärmeleitfähigkeit zu einer inhomogenen Temperaturverteilung. Daher werden entsprechend zu beheizende Kunststoffformen teilweise mit wärmeleitfähigen Füllstoffen wie z.B. Aluminiumpulver versehen, um die Wärmeleitfähigkeit zu verbessern.

Dennoch sind eine relativ schlechte Maßhaltigkeit, Verzug der Formen, eine inhomogene Temperaturverteilung und der relativ hohe Herstellungsaufwand bei flüssigkeitsbeheizten Kunststoffformen problematisch. Aufgrund der hohen Massen solcher Formen ist bei jedem Aufheizvorgang ein relativ hoher Energieaufwand erforderlich.

Eine Alternative stellt die elektrische Widerstandsheizung dar. Dabei werden bei metallischen Formen häufig Heizpatronen eingesetzt. Durch die hohe Wärmeleitfähigkeit des metallischen Formenwerkstoffes wird im Allgemeinen eine hinreichend homogene Temperaturverteilung erreicht.

Bei Kunststoffformen ist aufgrund der relativ schlechten Temperaturleitfähigkeit eine flächig wirkende Heizung nahe der zu beheizenden Fläche von Vorteil. Diese kann durch entsprechende Heizgewebe realisiert werden, welche nahe der Formenoberfläche in den Kunststoff eingebettet werden können. Für diesen Zweck speziell entwickelte Heizgewebe bestehen teilweise aus Widerstandsdrähten oder auch aus leitfähigem Faserwerkstoff, wie z.B. Kohlenstofffasern. Die Widerstandsdrähte bzw. Widerstandsfasern wirken dabei als ohmsche Widerstandsheizelemente. Tatsächlich ist diese Art der Heizung eine linienförmig wirkende Heizung, bei der entlang jedes einzelnen Widerstandsdrahtes oder jeder Widerstandsfaser eine Heizwärme erzeugt und an die umgebende Formmasse abgeleitet wird. Bei sehr feiner und dichter Verteilung der Widerstandsdrähte bzw. Widerstandsfasern wirkt diese Heizung makroskopisch betrachtet jedoch näherungsweise flächig.

Bei diesen Widerstandsheizungen werden die als Drähte oder Fasern wirkenden Heizelemente von elektrisch isolierenden Schichten eingebettet. Diese elektrisch isolierenden Schichten können z.B. bei GFK-Formen aus Epoxidharz und Glasfasern bestehen, die bekannter Weise über eine sehr gute elektrische Isolation, aber auch über eine relativ schlechte Wärmeleitfähigkeit verfügen. Die isolierenden Schichten haben dabei im allgemeinen einen wesentlich größeren Querschnitts- und Massenanteil an der Formenstruktur als die Heizdrähte oder Heizfasern. Dieses führt zum einen zu einer Temperaturerhöhung an der Grenzschicht zwischen Heizdraht bzw. Heizfaser sowie aufgrund der unterschiedlichen mechanischen und thermischen Eigenschaften von Heizdrähten bzw. Heizfasern zu Eigenspannungen. Damit verbunden ist insbesondere auch eine Verzugsgefahr der Formen.

Wie schon vorstehend erwähnt lassen sich als elektrisch leitfähige Fasern auch Kohlenstofffasern einsetzen (C-Fasern bzw. Carbon-Fasern genannt). C-Fasern haben im Vergleich zu den meisten Metallen eine geringe elektrische Leitfähigkeit in Faserrichtung und verfügen im Vergleich zu Kunststoffen über eine gute Wärmeleitfähigkeit in Faserrichtung. Daher eignen Sie sich besonders als ohmsche Widerstandsfasern. Eine weitere Besonderheit ist der geringe thermische Ausdehnungskoeffizient der Kohlenstofffasern, der je nach Fasertyp mit Werten von ca. $\alpha_{therm.} \approx -0{,}1 \cdot 10^{-6} / K$ angegeben wird. Kohlenstofffaserlaminate (sog. CFK, Kohlenstofffaserlaminate sind schichtweise Aufbauten von Kohlenstofffasern, die in einer Matrix, die häufig aus Kunststoff besteht, eingebettet sind) lassen sich bei entsprechender Faserausrichtung daher so aufbauen, dass eine Wärmedehnung der Laminate in weiten Temperaturbereichen praktisch nicht messbar ist.

Mit Kohlenstofffasern beheizte Kunststoffbauteile oder Kunststoffformen werden bisher so aufgebaut, dass entweder einzelne Fasern, Faserbänder oder Gewebe oder ein dünnes Kohlenstofffaservlies mit Kurzfasern in Kunststoffformen zwischen weiteren, elektrisch isolierenden Schichten eingebettet werden. Gemeinsam ist diesen Bauteilen oder Formen eine klare Funktionstrennung zwischen den als Widerstandsheizung dienenden Kohlenstofffasern und weiteren Laminatschichten, die im Wesentlichen die tragende Struktur der Form bilden und darüber hinaus in der Regel auch die elektrische Isolation der stromführenden Kohlenstofffasern übernehmen.

Aus der DE 10 2004 042 422 A1 ist ein beheizbares Formwerkzeug bekannt, bei dem mit Kohlenstofffasern, eingebettet in einer Kunststoffmatrix ein elektrisches Widerstandsheizelement verwendet wird, bei dem allerdings aufgrund der Anordnung des Widerstandsheizelementes relativ weit entfernt von der Oberfläche des herzustellenden Bauteiles sowie aufgrund der Schichtdicken der Faserverbundschichten des Formwerkzeuges hohe Heizleistungen benötigt werden, um das Bauteil hinreichend zu temperieren. Auch ist aufgrund der Serienschaltung der einzelnen Kohlenstofffaserelemente die elektrische Betriebssicherheit aufgrund möglicher Kurzschlüsse und damit auch punktuell ausfallender Beheizung nicht gewährleistet.

Der Aufbau der Heizschicht erfolgt bisher bei Einzelfasern oder Faserbändern im Allgemeinen so, dass einzelne oder mehrere parallele Fasern oder Faserbänder als Stränge auf der zu beheizenden Oberfläche abgelegt werden. Die einzelnen Stränge werden dann seriell verschaltet, wobei je zwei nebeneinander liegende Stränge zu insgesamt 4 seriellen Strängen verschaltet werden. Eine entsprechende Dimensionierung und Verschaltung wurde z. B. von der Firma R&G Flüssigkunststoffe aus Waldenbuch in der Broschüre "Heizsystem für Kunstharzformen" beschrieben. Die Firmenschrift zeigt anhand eines Beispiels, wie insgesamt 8 Stränge, von denen jeder einzelne aus 4 nebeneinander liegenden Kohlenstofffasern besteht, seriell verschaltet werden.

Wesentliche Nachteile treten bei dieser Vorgehensweise insbesondere dann auf, wenn Stränge seriell verschaltet werden, da zwischen zwei sich begegnenden Fasersträngen größere Potentialunterschiede auftreten. Dieses führt immer wieder zu Kurzschlüssen in der Form, die durch einzelne Kohlenstofffilamente sich begegnender Faserstränge hervorgerufen werden können. Dieses Problem tritt insbesondere bei einer mäanderförmigen Anordnung der Heizelemente auf. Dieses kann zwar durch einen hinreichend großen Sicherheitsabstand zwischen begegnenden Kohlenstofffasersträngen vermieden werden. Dabei treten dann aber gleichzeitig breitere "unbeheizte Zonen" auf, was wiederum eine inhomogene Temperaturverteilung zur Folge hat.

Ein weiterer Nachteil liegt in den unterschiedlichen mechanischen und thermischen Eigenschaften der weiteren Laminatschichten, die die elektrische Isolierung der Heizschicht bilden und außerdem im Wesentlichen die tragende Struktur der Form bilden. Diese bestehen zumeist aus glasfaserverstärktem Kunststoff (GFK). Aufgrund der unterschiedlichen Wärmeausdehnung von GFK und CFK (Kohlenstofffaserverstärktem Kunststoff) treten bei entsprechenden Temperaturdifferenzen erhebliche Wärmespannungen und Verzüge auf. Diese sind im Allgemeinen nur durch hohe Wandstärken des Formenaufbaus beherrschbar, aber nicht ganz zu vermeiden. Kunststoffformen dabei in Sandwichbauweise auszuführen ist ein ebenfalls bekannter Ansatz, mit dem der Verzug zwar verringert, aber unter den vorgenannten Voraussetzungen nicht ganz vermieden werden kann.

Aus der FR 2 691 400 A1 und der EP 0 218 038 A1 sind Formwerkzeuge bekannt, bei denen unidirektional gebildete Anordnungen von Kohlenstofffasern als Heizelemente oberflächennah in eine Kunststoffmatrix eingebracht sind und zur Erwärmung herzustellender Werkstücke dienen. Das Document EP0218038 A1 offenbart ein formwerkzeug gemäß dem Oberbegriff des Anspruchs 1.

Aufgabe der vorliegenden Erfindung ist es daher, die geschilderten Probleme bei der Beheizung von Formwerkzeugen zu vermeiden und mit einem geeigneten Aufbau der Schichten des Formwerkzeuges dafür zu sorgen, dass die Beheizung von Formwerkzeugen sicher und energieeffizient ausgeführt werden kann

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung betrifft ein Formwerkzeug für die urformende oder umformende Formgebung von Bauteilen aus thermisch beeinflussbaren Werkstoffen, vorzugsweise aus Kunststoffen und insbesondere aus Faserverbundwerkstoffen, bei dem das Formwerkzeug eine Faserverbundstruktur und ein elektrisches Widerstandsheizelement aufweist, wobei in die Faserverbundstruktur des Formwerkzeuges nahe der formgebenden Oberfläche des Formwerkzeuges Kohlenstofffasern oder Kohlenstofffilamente in einer Kunststoffmatrix eingelagert sind. Ein derartiges gattungsgemäßes Formwerkzeug wird dadurch weiter entwickelt, dass die Kohlenstofffasern oder Kohlenstofffilamente in der Kunststoffmatrix nahe der formgebenden Oberfläche im wesentlichen die mechanischen Eigenschaften, insbesondere die Festigkeit, die Steifigkeit und/oder die Wärmedehnung, des Formwerkzeuges bestimmen und das elektrische Widerstandsheizelement derart verschaltet ist, dass zumindest einzelne Abschnitte des elektrischen Widerstandsheizelementes miteinander eine elektrische Parallelschaltung bilden. Die Besonderheit der Erfindung liegt in der Integration der Heizschicht und der Struktur der Formenoberfläche. Wesentlich ist dabei, dass die Kohlenstofffaserschicht zugleich als Widerstandsheizelement genutzt werden und den wesentlichen Bestandteil des Querschnittes der Formenoberfläche bilden. Hierbei ist nicht der Schichtdickenanteil der Kohlenstofffaserschichten im Vergleich zu weiteren Schichten entscheidend, sondern die Tatsache, dass die Kohlenstofffaserschichten die mechanischen Eigenschaften, insbesondere die Festigkeit, die Steifigkeit und auch die Wärmedehnung des Schichtaufbaus der Faserverbundstruktur dominieren. Mit Hilfe der Erfindung kann die Masse entsprechender Formenwerkzeuge deutlich verringert werden, was die Wärmekapazität der Formwerkzeuge insgesamt und somit den Energieeinsatz beim Aufheizen der Formenwerkzeuge deutlich reduziert. Aufgrund des erfindungsgemäßen Aufbaus und einer abgestimmten Materialauswahl kann ein Wärmeverzug der Formen in einem weiten Temperaturbereich weitgehend vermieden werden. Mit der Erfindung wurde eine kostengünstige Lösung gefunden, um Formenwerkzeuge in fast beliebiger Größe homogen und mit vergleichsweise geringem Energieaufwand elektrisch beheizen zu können. Kernpunkt der Erfindung ist die Integration von Heizschicht und tragender Deckschicht, bei der die elektrische Leitfähigkeit von Kohlenstofffasern genutzt wird, um die tragende Deckschicht der Form unmittelbar als Widerstandsheizung zu nutzen. Im Gegensatz zu bisherigen Versuchen, die elektrische Leitfähigkeit von Kohlenstofffasern als Widerstandsheizung zu nutzen, erfolgt die elektrische Beschaltung der Formen in Form einer Parallelschaltung derart, dass Kurschlüsse wie bei der üblichen Serienschaltung aufgrund von Potentialunterschieden sich begegnender Heizstränge ausgeschlossen werden. Dadurch kann auch auf weitere isolierende Schichten mit Ausnahme der Formendeckschicht weitestgehend verzichtet werden. Durch die Parallelschaltung des elektrischen Widerstandsheizelementes wird der Widerstand des elektrischen Widerstandsheizelementes stark reduziert und damit die Erwärmung des Formenwerkzeuges schon mit geringen anzulegenden Spannungen möglich.

Während bei bisherigen Kohlenstofffaserbasierenden Heizschichten vorzugsweise unidirektionale Kohlenstofffasergewebe oder Kohlenstofffasergelege eingesetzt wurden, so werden hier vorzugsweise bidirektionale Kohlenstofffasergewebe eingesetzt. Auch der Einsatz von multiaxialen Geweben oder Gelegen ist denkbar. Im vorliegenden Fall sorgen in Querrichtung verlaufende Kohlenstofffasern für einen Potentialausgleich in orthogonaler Richtung zum Stromfluss der Heizschicht. Auf diese Weise können auch Defekte oder Unterbrechungen in einzelnen Kohlenstofffasern überbrückt werden. Hierbei können die elektrisch unmittelbar kontaktierten Kohlenstofffasern vorzugsweise parallel in Längsrichtung des Formwerkzeuges verlaufen und zusätzliche, quer oder schräg dazu verlaufende Kohlenstofffasern indirekt über den Schichtkontakt leitende Funktion mit übernehmen und auf diese Weise einerseits einen elektrischen Potentialausgleich quer zur Hauptstromflussrichtung erwirken können und andererseits einen multiaxialen, vorzugsweise quasiisotropen Laminataufbau ermöglichen, der bei Verwendung von Kohlenstofffasern den Aufbau von Deckschichten mit sehr geringer Wärmedehnung erlaubt.

Die das elektrische Widerstandsheizelement bildende Anordnung von Kohlenstofffasern oder Kohlenstofffilamenten sind teilweise oder gänzlich als Einheiten in Form von Gelegen, Geweben ausgebildet. Hierbei können einzelne Abschnitte der bauteilseitigen Oberfläche des Formenwerkzeuges vollflächig oder auch nur abschnittsweise mit derartigen Einheiten gebildet werden, die dann insgesamt wieder in Form einer Parallelschaltung miteinander verschaltet werden. Von Vorteil ist hierbei, dass neben der Anpassung der Form und Ausbildung derartiger Einheiten an die jeweilige Topographie des Bauteiles eine weitgehend flächige Beheizung des Bauteiles erreicht wird, die bei üblicherweise mäanderförmig verlaufender serienverschalteter Widerstandsheizelement nur sehr aufwändig zu erreichen ist.

Von besonderem Vorteil ist es hierbei, dass die Kohlenstofffasern oder Kohlenstofffilamente in der Kunststoffmatrix direkt angrenzend an die bauteilseitige Oberfläche des Formwerkzeuges eingelagert sind. Die auf diese Weise integrierte Beheizung des Formwerkzeuges erzeugt die Heizleistung unmittelbar an der bauteilseitigen Formenoberfläche. Die Beheizung wirkt dabei großflächig unmittelbar dort, wo die Wärme benötigt wird. Das verkürzt die Wärmeflusswege, vermindert Übertemperaturen in unmittelbarer Umgebung der Kohlenstofffasern und führt zu einer sehr energiesparenden Umsetzung der elektrischen Heizenergie.

In weiterer Ausgestaltung ist es denkbar, dass die das elektrische Widerstandsheizelement bildende Anordnung von Kohlenstofffasern oder Kohlenstofffilamenten oder daraus gebildeten Einheiten im wesentlichen quasiisotrop ausgebildet sind. Hierdurch kann erreicht werden, dass sowohl hinsichtlich der mechanischen Festigkeitswerte als auch der thermischen Wirkung der Kohlenstofffasern oder Kohlenstofffilamenten oder der daraus gebildeten Einheiten in allen Bereichen des Formenwerkzeuges gleiche Verhältnisse vorliegen und damit eine über alle Bereiche des herzustellenden Bauteiles gleichmäßige Temperierung des Bauteiles erzielt wird.

Eine weitere Ausführungsform ist derart gestaltet, dass partiell entweder zusätzliche Kohlenstofffaserschichten aufgebracht oder auch die Anzahl und/oder Stärke der Kohlenstofffaserschichten reduziert wird. Das wesentliche Merkmal ist dabei, dass aufgrund des ohmschen Verhaltens der Form die Flächenheizleistung partiell verändert wird. Auf diese Weise können auch unterschiedliche Flächenheizleistungen ausgeglichen werden, die sich beispielsweise bei nichtrechteckigen Formenquerschnitten zwangsläufig ergeben. So müsste beispielsweise bei einer länglichen trapezförmigen Form mit deutlicher Zuspitzung die gesamte Stärke der Kohlenstofffaserlagen zum zuspitzenden Ende hin kontinuierlich ansteigen, wenn über der gesamten Formenoberfläche eine konstante Flächenheizleistung erreicht werden soll.

Denkbar ist es ebenfalls, dass zwischen einzelnen Einheiten der das elektrische Widerstandsheizelement bildenden Anordnung von Kohlenstofffasern oder Kohlenstofffilamenten elektrisch nichtleitende Bereiche ausgebildet sind. Derartige nichtleitende Bereich können zur gezielten Temperaturausbildung in dem Bauteil dienen, da in derartigen nichtleitenden Bereichen auch keine aktive Temperierung des Bauteiles erfolgt und sich damit gezielt Temperaturgradienten innerhalb des Bauteiles bei dessen Aushärtung erzielen lassen. Denkbar ist es hierbei, dass die elektrisch nichtleitenden Bereiche innerhalb einer Ebene oder senkrecht zwischen übereinander angeordneten Ebenen eingefügt sind, um die jeweils benachbart nebeneinander oder übereinander liegenden Widerstandsheizelemente voneinander zu separieren.

Hinsichtlich des mechanischen Verhaltes des Formwerkzeuges ist es von besonderer Wichtigkeit, dass die das elektrische Widerstandsheizelement bildende Anordnung von Kohlenstofffasern oder Kohlenstofffilamenten oder daraus gebildete Einheiten in der Kunststoffmatrix eine hohe Steifigkeit aufweist. Hierdurch wird, da gleichzeitig die anderen Schichten weniger steif ausgeführt werden können, die Gesamtsteifigkeit des Formwerkzeuges weit überwiegend von Kohlenstofffaserschichten bestimmt. Außerdem lassen sich so Wärmespannungen zwischen unterschiedlichen Materialien in etwa gleich steif ausgelegten Schichten des Formwerkzeuges vermeiden und damit der Verzug des Formwerkzeuges beim Aufheizen entscheidend reduzieren, wodurch die Maßhaltigkeit des herzustellenden Bauteils deutlich erhöht werden kann.

Wichtig hinsichtlich der bei der Temperierung des Formwerkzeuges auftretenden Spannungen und Verformungen ist es, dass die Wärmedehnung der das elektrische Widerstandsheizelement beinhaltenden Schicht aus Kohlenstofffasern oder Kohlenstofffilamenten oder daraus gebildeten Einheiten in der Kunststoffmatrix sehr gering ist. Hierdurch geht auch bei größeren Temperaturänderungen des Formenwerkzeuges nur eine geringe Maßänderung des herzustellenden Bauteiles einher, wodurch die Fertigung vereinfacht und verbessert wird. Weiter reduziert werden können die Zykluszeiten bei der Benutzung des Formwerkzeuges durch eine aktive Kühlung, die auf einfache Weise erreicht werden kann, indem beim Aufbau des Formwerkzeuges in Sandwichbauweise der Sandwichkern mit Kanälen durchzogen ist, durch die Kühlluft oder andere gasförmige oder flüssige Kühlmedien hindurchgeleitet werden. Dabei ist es zusätzlich möglich, entsprechende Medien zum Ausgleich von Temperaturgradienten während der Aufheizphase im geschlossenen Kreislauf durch die Form zu leiten. Auf einfache Weise kann eine entsprechend drainagefähige Form z.B. mit geschlitzten Kernmaterialien aufgebaut werden.

Eine weitere Verbesserung der Wirtschaftlichkeit des Einsatzes erfindungsgemäß gebildeter Formenwerkzeuge lässt sich erreichen, da der Energieaufwand zur Beheizung des Formwerkzeuges aufgrund der geringen Schichtdicken aus dem Material der das elektrische Widerstandsheizelement beinhaltenden Schicht ebenfalls nur gering ist. Die Temperierung und Abkühlung der Masse des Formenwerkzeuges kann aufgrund der geringen Schichtdicken wesentlich schneller und mit geringerem Energieeinsatz erfolgen, so dass die Zykluszeiten zur Herstellung entsprechender Bauteile reduziert werden können.

Weiterhin ist es von Vorteil, dass der elektrische Widerstand der parallel miteinander verschalteten Kohlenstofffasern oder Kohlenstofffilamenten oder daraus gebildeten Einheiten insgesamt durch die Parallelschaltung sehr gering ist. Hierdurch ist es erreichbar, dass schon geringe Spannungen, insbesondere Niedervoltspannungen zur Aufheizung an das elektrische Widerstandsheizelement genutzt werden können und dadurch auch die elektrische Betriebssicherheit gewährleistet sowie der Energieeinsatz minimiert wird.

Von Vorteil im Hinblick auf die Ausbildung der Oberfläche des herzustellenden Bauteils ist es, wenn die bauteilseitige Oberfläche des Formwerkzeuges durch eine Formendeckschicht gebildet ist, die die das elektrische Widerstandsheizelement beinhaltende Schicht bauteilseitig, vorzugsweise dünnschichtig abdeckt. Eine derartige dünne Formendeckschicht sorgt für glatte Oberflächen des Bauteiles und vermeidet Beschädigungen der die Kohlenstofffasern beinhaltenden Schicht. Durch entsprechend geringe Schichtdicken sowie gute Wärmeleiteigenschaften dieser Formendeckschicht werden sonst mögliche Probleme der Temperaturleitung zwischen der Schicht mit dem Widerstandsheizelement und dem Bauteil sicher vermieden.

Von Vorteil im Hinblick auf die mechanische Stabilität des Formenwerkzeuges ist es, wenn auf der bauteilabgewandten Seite der das elektrische Widerstandsheizelement aufweisenden Schicht eine Versteifungsschicht aufgebracht ist. Eine derartige Versteifungsschicht, die z.B. in Form einer stabilen Leichtbauschicht etwa aus einem Sandwichaufbau gebildet sein kann, sorgt für eine weitere mechanische Befestigung im Aufbau des Formenwerkzeuges, ohne dass das Gewicht des Formenwerkzeuges über die Maßen erhöht wird. Bei einem Sandwichaufbau kann dabei die Heizschicht vorzugsweise zugleich eine der beiden Decklagen herstellen, die zum Aufbau eines Sandwichaufbaus erforderlich sind. Denkbar ist es beispielsweise auch, dass die Versteifungsschicht elektrisch isolierend ausgebildet ist.

Hinsichtlich des Aufbaus der Schichten des Formenwerkzeuges kann es von Vorteil sein, wenn zusätzliche Zwischenschichten zwischen der das elektrische Widerstandsheizelement beinhaltenden Faserverbundschicht, der Formendeckschicht und/oder der Versteifungsschicht angeordnet sind, die z.B. elektrisch isolierend ausgebildet sind oder eine haftvermittelnde Funktion für die angrenzenden Schichten der Faserverbundstruktur aufweisen. Derartige Zwischenschichten die etwa aus einem vorzugsweise dünnen Glasfasergewebe in der Faserverbundstruktur gebildet werden können, optimieren die Eigenschaften des gesamten Schichtaufbaus.

Denkbar ist es weiterhin, dass als auf der bauteilabgewandten Seite der Versteifungsschicht angeordnete weitere Formendeckschicht eine Schicht mit Kohlenstofffasern vorsehbar ist, die in einer Kunststoffmatrix eingelagert sind. Hierdurch wird einem Verzug der Schichten des Formenwerkzeuges bei der Temperierung weiter vorgebeugt, da diese weitere Formendeckschicht mechanisch ähnlich wie die das elektrische Widerstandsheizelement beinhaltenden Faserverbundschicht aufgebaut sein kann und damit etwa eine dazwischen angeordnete Versteifungsschicht beidseitig von mechanisch gleichwertigen Schichten umgeben ist. Denkbar ist es hierbei, dass die Kohlenstofffasern der bauteilabgewandten Formendeckschicht elektrisch isoliert gegen die Kohlenstofffasern der bauteilzugewandten, das elektrische Widerstandsheizelement beinhaltenden Faserverbundschicht ist.

Im Hinblick auf die gleichmäßigen mechanischen und elektrischen Eigenschaften der das elektrische Widerstandsheizelement beinhaltenden Faserverbundschicht ist es, wenn die Ausrichtung von Kohlenstofffasern oder Kohlenstofffilamente oder der Einheiten aus Kohlenstofffasern oder Kohlenstofffilamenten versetzt und/oder verdreht zu anderen Kohlenstofffasern oder Kohlenstofffilamente oder der Einheiten der gleichen Faserverbundschicht ist. Hierdurch könne die Fasern oder Einheiten so ausgerichtet werden, dass mechanische Belastungen und auch die Temperaturerzeugung weitgehend gleichmäßig innerhalb der das elektrische Widerstandsheizelement beinhaltenden Faserverbundschicht erfolgt und damit entsprechend gleichmäßig auch auf das Bauteil übertragen wird.

Von Vorteil ist es weiterhin, wenn die Formendeckschicht und die Zwischenschichten nur geringe Steifigkeiten aufweisen und die mechanischen Eigenschaften der gesamte Faserverbundstruktur nur geringfügig beeinflussen. Dadurch ergeben sich keine wesentlichen Spannungen bei der Temperierung des Formenwerkzeuges zwischen den einzelnen Schichten, so dass Verzüge des Formenwerkzeuges minimiert werden.

Hinsichtlich der elektrischen Kontaktierung des elektrischen Widerstandsheizelementes ist es von Vorteil, wenn die das elektrische Widerstandsheizelement bildende Anordnung von Kohlenstofffasern oder Kohlenstofffilamenten oder daraus gebildete Einheiten endseits der Fasern oder der Einheiten elektrisch kontaktiert und als Parallelschaltung miteinander verschaltet sind. Durch die außenliegende Kontaktierung kann eine gute Zugänglichkeit des Widerstandsheizelementes erreicht und die Verschaltungsarbeiten für die Parallelschaltung einfach durchgeführt werden.

Hinsichtlich der Temperierung des Bauteiles hat sich insbesondere für den benötigten Energieaufwand als besonders vorteilhaft heraus gestellt, wenn bei der Aufheizung des Formwerkzeuges zur Formgebung eines Bauteils das Formwerkzeug zumindest abschnittsweise thermisch isolierend umhüllt wird. Durch die thermisch isolierende Umhüllung kann die erzeugte Wärme besonders gut innerhalb de Formwerkzeuges gehalten werden und, je nach Vorhandensein von Dämmmaterial, die Art und Dicke des Dämmmaterials sowie die Platzierung des Dämmmaterials das Dämmmaterial zur lokalen Temperatursteuerung bei der Aufheizung des Bauteils innerhalb des Formwerkzeuges genutzt werden. So ist es beispielsweise denkbar, das Formwerkzeug nur lokal zu isolieren und damit lokal höhere Temperaturen zu erzeugen, die das Aushärten des Bauteils anders beeinflussen als an nicht oder weniger isolierten Bereichen. Dies erlaubt eine weitere Beeinflussung des Herstellvorganges des Bauteiles innerhalb des Formwerkzeuges.

Besonders vorteilhaft ist es, wenn die Materialien des Formwerkzeuges auf derartige Temperaturen ausgelegt sind, dass die das Formwerkzeug bildenden Schichten der Faserverbundstruktur eine Temperatur bei der Herstellung des Bauteils von bis zu 300°C, vorzugsweise von bis zu 140°C unproblematisch ertragen, ohne selbst Festigkeitseigenschaften einzubüssen. In einer weiteren Ausgestaltung in Bezug auf die Temperaturstabilität ist es auch denkbar, dass keramische Matrixwerkstoffe zur Bildung der Faserverbundstruktur oder Teilen davon genutzt werden.

Weiterhin denkbar ist es, dass die elektrischen Heizelemente in Stromflussrichtung segmentiert sind und einzelne Segmente durch zusätzliche elektronische Bauelemente ganz oder teilweise überbrückt werden können, um den Stromfluss und die Heizleistung in dem entsprechenden Segment zu beeinflussen. Hierdurch kann ganz gezielt dort thermische Energie in die zu verarbeitenden Bauteile eingebracht werden, in denen die thermische Energie benötigt wird, wohingegen in anderen Bereichen keine oder eine geringere thermische Energie in den elektrischen Heizelementen erzeugt wird. Von Vorteil kann es hierbei sein, wenn die elektrischen Heizelemente in Stromflussrichtung segmentiert sind und die einzelnen Segmente eines Heizelementes eine Reihenschaltung bilden. Hierdurch kann insbesondere erreicht werden, dass die segmentierten elektrischen Heizelemente aufgrund der Reihenschaltung auch bei großen Abmessungen des Formwerkzeuges insgesamt mit Kleinspannung betreibbar sind und damit sowohl elektrisch als auch sicherheitstechnisch eine einfache Beheizung des Formwerkzeuges erreicht werden kann.

Weiterhin ist es denkbar, dass einzelne stromführende und übereinander angeordnete Schichten der elektrischen Heizelemente in Dickenrichtung durch dünne isolierende Schichten derart gegeneinander isoliert sind, dass eine individuelle Segmenteinteilung durch Stapelung dünnschichtiger Heizelemente in Multilayertechnik erreichbar ist. Hier wird eine mit der segmentierten Gestaltung der Heizelemente erreichbare unterschiedliche Einbringung thermischer Energie durch eine im wesentlichen senkrecht zur Formwerkzeugoberfläche angeordnete Stapelung von Heizelementen erreicht, die jeweils durch dünne isolierende Schichten elektrisch voneinander getrennt übereinander gestapelt sind.

In weiterer Ausgestaltung kann durch zusätzliche dünne und lokal begrenzt eingebrachte elektrische Heizelemente der Stromfluss in dem Formwerkzeug lokal derart verändert werden, dass eine partielle Veränderung der Flächenheizleistung innerhalb der Fläche des Formwerkzeuges möglich ist. Durch alle vorhergehend genannten Maßnahmen kann dafür gesorgt werden, dass eine lokal wirksame Veränderung der Einbringung thermischer Energie in die Oberfläche des Formwerkzeuges erreicht wird, die beispielsweise für die Urformung oder die Umformung des Bauteils an dieser lokalen Stelle vorteilhaft ist.

Eine besonders bevorzugte Ausführungsform des erfindungsgemäßen Formwerkzeuges gemäß Anspruch 1 zeigt die Zeichnung.

Es zeigen:

Fig. 1 - Aufbau eines einfachen beheizbaren Formwerkzeuges gemäß der Erfindung in Form eines Rechteckes, aufgezeigt am Beispiel eines ausbruchhaft dargestellten Querschnittes,

Fig. 2 - Strom, Heizleistung und Flächenheizleistung der Form bei vorgegebener Heizspannung des Formwerkzeuges gemäß Figur 1,

Fig. 3 - Temperaturverläufe beim Aufheizen des Formwerkzeuges gemäß Figur 1 mit unterschiedlichen Isolierungen bei einer Flächenheizleistung von 200 W/m$^2$.

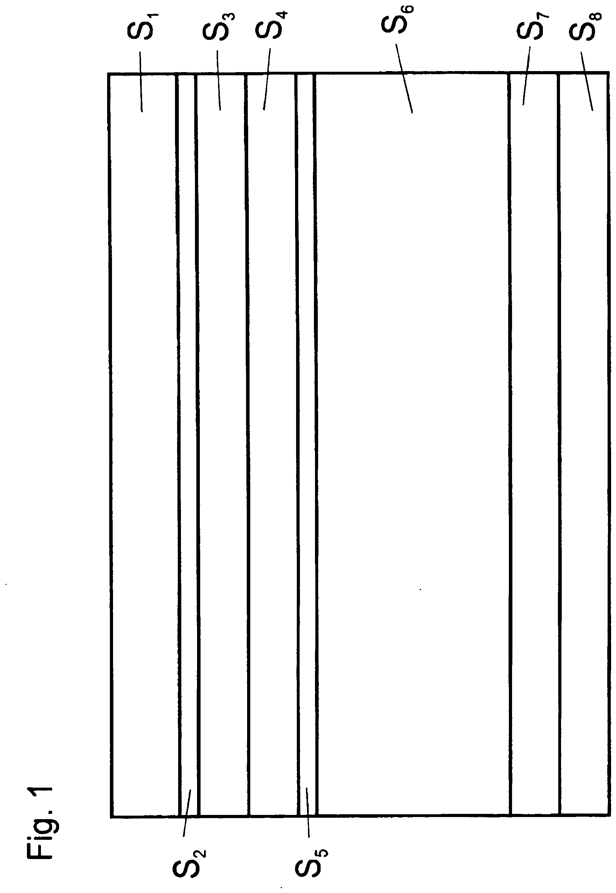

Als Beispiel wird in der Figur 1 der Aufbau eines einfachen beheizbaren Formwerkzeuges in Form eines Rechteckes angegeben, bei dem das Formwerkzeug mit folgendem Schichtaufbau hergestellt werden kann:

| | |
|---|---|
| 1. Lage: | Formendeckschicht (Schichtdicke $s_1 \approx 0{,}4$ mm) |
| 2. Lage: | Glasfasergewebe 105 g/m$^2$ (Schichtdicke $s_2$ = 0,1 mm) |
| 3. Lage: | Biaxiales Kohlenstofffasergewebe 193 g/m$^2$ (Schichtdicke $s_3 \approx 0{,}27$ mm), Faserorientierung 0° / 90° |
| 4. Lage: | Biaxiales Kohlenstofffasergewebe 193 g/m$^2$ (Schichtdicke $s_4 \approx 0{,}27$ mm), Faserorientierung $\pm 45$ |
| 5. Lage: | Glasfasergewebe 105 g/m$^2$ (Schichtdicke $s_5 \approx 0{,}1$ mm) |
| 6. Lage: | Polyamid-Wabenkern ECA 3.2-48 (Schichtdicke $s_6 \approx 12{,}7$ mm) |
| 7. Lage: | Biaxiales Kohlenstofffasergewebe 193 g/m$^2$ (Schichtdicke $s_7$ = 0,27 mm), Faserorientierung $\pm 45$ |
| 8. Lage: | Biaxiales Kohlenstofffasergewebe 193 g/m$^2$ (Schichtdicke $s_8$ = 0,27 mm), Faserorientierung 0° / 90° |

Es versteht sich von selbst, dass der angeführte Schichtaufbau nur ein Beispiel aus vielen denkbaren Schichtaufbauten aufzeigt und im Rahmen der Erfindung vielfältig abgeändert werden kann.

Betrachtet man den gesamten in der Figur 1 aufgezeigten Querschnitt des Formwerkzeuges als Sandwichaufbau, so bilden die Lagen 1 bis 5 die erste Sandwichdecklage. Die 6. Lage ist der Sandwichkern und die Lagen 7 und 8 bilden die zweite Sandwichdecklage.

Die gewebeverstärkten Schichten wurden mit einem kalthärtenden Laminierharz getränkt, das nach entsprechender Temperung eine Wärmeformbeständigkeit von bis zu 140° C aufweist.

Die Formendeckschicht der Schichtdicke $s_1$ besteht z.B. aus einem konventionellen Formendeckschichtharz mit einer Wärmeformbeständigkeit von 140° C. Im Vergleich zu den faserverstärkten Schichten ist diese Schicht relativ dick. Aufgrund der geringen Steifigkeit gegenüber den Schichten des Kohlenstofffasergewebes beeinflusst sie die mechanischen Eigenschaften des gesamten Formenaufbaus aber nur unwesentlich. Die Formendeckschicht ist polierbar und gewährleistet aufgrund der porenfreien Oberfläche eine hohe Anzahl von Entformungen bei geringem Formenverschleiß.

Die Glasfasergewebeschicht der Schichtdikken $s_2$ und $s_5$ kann aus fertigungstechnischen Gründen erforderlich sein und soll eine gute Haftung zwischen der Formendeckschicht $s_1$ und den Schichten des Kohlenstofffasergewebes $s_3$ und $s_4$ sicher stellen. Auch diese Schichten verfügen über eine geringe Steifigkeit gegenüber den nachfolgenden Schichten des Kohlenstofffasergewebes und beeinflussen die mechanischen Eigenschaften des gesamten Formenaufbaus nur geringfügig.

Die Schichten des Kohlenstofffasergewebes $s_3$ und $s_4$ bilden sowohl die elektrische Widerstandsheizschicht als auch den wesentlichen strukturellen Bestandteil der ersten Sandwichdecklage. Aufgrund ihrer hohen Steifigkeit im Vergleich zu den weiteren Schichten bestimmen sie weitgehend die mechanischen Eigenschaften und die thermische Ausdehnung der ersten Sandwichdecklage.

Die Glasfasergewebeschicht $s_5$ kann wie $s_2$ aus fertigungstechnischen Gründen erforderlich sein und gewährleistet eine gute Haftung zwischen den Schichten des Kohlenstofffasergewebes und dem Sandwichkern $s_6$.

Die Schichten des Kohlenstofffasergewebes $s_7$ und $s_8$ bilden als quasiisotroper Laminataufbau die zweite Sandwichdecklage.

Da die thermische Ausdehnung beider Sandwichdecklagen im Wesentlichen von den Kohlenstofffasern bestimmt wird, ist ihre Wärmedehnung und damit der mögliche Wärmeverzug bei unterschiedlichen Temperaturen sehr gering.

Bei dem beschriebenen Aufbau des Formenwerkzeuges kommen im wesentlichen folgende Überlegungen und Eigenschaften zum Tragen:

• Wesentlicher Bestandteil der Form ist eine Schicht aus Kohlenstofffasergewebe in einer Kunststoffmatrix, die sowohl tragende Funktion des Formenhinterbaus übernimmt als auch unmittelbar als Heizschicht in Form einer elektrischen Widerstandsheizung durch Bestromung der Kohlenstofffasern dient. Das Kohlenstofffasergewebe in der Kunststoffmatrix sollte dabei möglichst quasiisotrop aufgebaut sein. Durch Integration von Formenheizung und tragendem Formenhinterbau kann der Materialaufwand für das Formenwerkzeug deutlich verringert werden. Gleichzeitig wird die zum Aufheizen der Form erforderliche Wärmemenge reduziert. Außerdem lassen sich so Wärmespannungen zwischen unterschiedlichen Materialien vermeiden.

• Das möglichst homogene Kohlenstofffasergewebe in der Kunststoffmatrix bildet einen einzelnen Heizstrang, der vorzugsweise in Längsrichtung der Form parallel verschaltet wird. Damit besteht das Heizelement aus einer dünnen Laminatschicht. Der Querschnitt entspricht bei einer Verschaltung in Längsrichtung der Form annähernd dem Produkt aus der Breite "B" der Form und Dicke "s" des Kohlenstofffasergewebes. Die Länge "L" des Heizelementes entspricht im vorliegenden Fall näherungsweise der Gesamtlänge des Formenwerkzeuges.

• Eine harzreiche Formendeckschicht, die eine porenfreie Oberfläche der Form und gute Trennwirkung bei der Bauteilherstellung gewährleistet, wird dabei i. A. erforderlich sein. Diese Formendeckschicht sollte, soweit sie erforderlich ist, möglichst dünn sein und die mechanischen und thermischen Eigenschaften der Schicht des Kohlenstofffasergewebes in der Kunststoffmatrix nur unwesentlich beeinflussen.

• Die beheizte Schicht des Kohlenstofffasergewebes in der Kunststoffmatrix bildet, ggf. in Verbindung mit oben genannter Formendeckschicht, die eigentliche Formenfläche, die insgesamt dünnwandig und somit relativ biegeschlaff ist. Zur Versteifung kann das Formenwerkzeug in Sandwichbauweise aufgebaut werden. Das Kernmaterial der Versteifungsschicht kann dabei elektrisch isolierend sein, wenn ein Stromfluss zur zweiten Deckschicht unterbunden werden soll. Sollte der Stromfluss zur zweiten Deckschicht erwünscht sein, kann auch ein elektrisch leitfähiges Kernmaterial der Versteifungsschicht verwendet werden.

• Die zweite Formendeckschicht besteht vorzugsweise ebenfalls aus einem quasiisotropen Kohlenstofffasergewebe in einer Kunststoffmatrix. Damit wird die Temperaturausdehnung des Formenwerkzeuges im Wesentlichen von zwei quasiisotropen Decklaminaten bestimmt. Da diese Laminataufbauten bekannter Weise in einem weiten Temperaturbereich nur sehr geringe Wärmedehnungen aufweisen, sind sowohl Wärmedehnung als auch Wärmeverzug der Form trotz unterschiedlicher Temperaturen in den Deckschichten sehr gering. Wenn beide Deckschichten nur geringe Wärmedehnungen aufweisen, bleibt auch die Biegeverformung der Form durch Temperatureinflüsse sehr gering. Geringe temperaturbedingte Biegeverformungen können zudem durch Erhöhung der Kernstärke ohne nennenswerten Gewichtszuwachs der Form reduziert werden.

• Weitere Schichten können an beliebiger Stelle zwischengefügt werden, wenn z.B. eine elektrische Isolierung einzelner Schichten gewünscht wird oder aus verarbeitungstechnischen Gründen eine ausreichende Haftung einzelner Schichten zueinander dieses sinnvoll erscheinen lässt. Dabei ist darauf zu achten, dass zusätzliche Schichten so ausgeführt werden, dass sie die mechanischen Eigenschaften und insbesondere die Wärmedehnung der Heizschicht nicht oder nur gering beeinflussen. Hierbei wäre insbesondere der Einsatz von Alu-Wabenkernen oder Kohlenstofffaser-Wabenkernen vorstellbar.

Hinsichtlich der Auslegung der Heizleistung des Formenwerkzeuges gemäß Figur 1 ist folgendes von Bedeutung:

Die vorliegende beheizbare Form ist als Beispiel rechteckig mit einer beheizten Länge L = 1.370 mm und einer Breite von B = 557 mm. Nur die Lage $s_3$ wurde im vorliegenden Fall direkt elektrisch kontaktiert. Dazu wurden jeweils 4 Kettfäden aus Kohlenstofffasern in einer Aderendhülse verquetscht und mit einem eingebetteten Masseband verlötet. Diese Kettfäden verlaufen in Längsrichtung der Form und bilden damit eine Parallelschaltung der einzelnen Widerstandsfäden. Quer dazu verlaufende Schussfäden dieser Gewebelage ebenfalls aus Kohlenstofffasern sind bei dieser Anordnung im Prinzip nicht stromführend, können aber zum Potentialausgleich dienen, falls z. B. einzelne Kettfäden beschädigt sein sollten.

Für den elektrischen Widerstand der Lage $s_3$ gilt somit im vorliegenden Fall:

$$R_3 = \frac{R_{spez,\,Faden} \cdot L}{n}$$

Dabei sind:

$R_3$:  elektrischer Widerstand der 3. Lage
$R_{spez'\,Faden}$:  spezifischer Widerstand es einzelnen Kettfadens
L:  Länge der Heizzone
n:  Anzahl der parallel geschalteten Kettfäden

Versuche haben gezeigt, dass weitere Kohlenstofffaserlagen, die unmittelbar auf die elektrisch kontaktierte Faserlage aufgebracht werden, nahezu die gleiche Leitfähigkeit besitzen wie die direkt kontaktierte Lage.

Bei schräg verlaufenden Fasern ist die entsprechend geänderte Faserzahl pro Breite sowie die sich ergebende Länge zu berücksichtigen. Im vorliegenden Fall hat die diagonal verlegte 4. Lage insgesamt die gleiche Leitfähigkeit wie die 3. Gewebelage.

Aufgrund zusätzlicher Kontaktwiderstände wird an der Form ein geringfügig höherer Wert gemessen als sich durch die theoretische Berechnung ergibt. Der gemessene Widerstand lag hier ca. 12% über dem zuvor berechneten Wert.

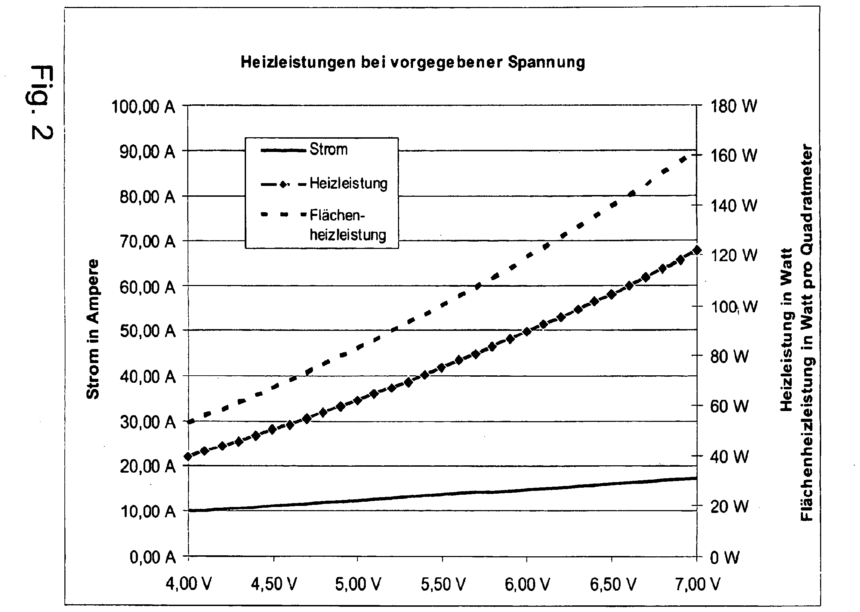

Figur 2 stellt den Strom, die Heizleistung und die Flächenheizleistung der Form dar, wie sie sich bei vorgegebener Heizspannung ergeben. Da sich der Ohmsche Widerstand der Formenheizung im Temperaturbereich bis 100°C nur unwesentlich verändert, steigt der Strom linear mit der Heizspannung während die Heizleistung mit dem Quadrat der Spannung zunimmt.

Wesentlich hierbei ist außerdem, dass der Ohmsche Widerstand bei entsprechendem Aufbau sehr gering ist, so dass selbst größere Heizformen mit Kleinspannung beheizt werden können.

In verschiedenen Versuchsaufbauten konnte gezeigt werden, dass der theoretisch berechnete ohmsche Widerstand für unterschiedliche Aufbauten der Heizschicht gut mit den gemessenen Werten übereinstimmt.

Die Temperatur, die bei entsprechender Formenheizung an der Formenoberfläche erreicht wird, hängt im Wesentlichen von folgenden Parametern ab:

• Flächenheizleistung in W/m$^2$

• Umgebungstemperatur

• Wärmefluss in der Form

• An die Form angrenzende Medien, die die Wärmeübertragung an die Umgebung beeinflussen.

Dabei zeigte sich deutlich, dass die erreichbare Temperatur weit weniger von der Flächenheizleistung als von der Isolierung bestimmt wird.

Als besonders vorteilhaft für den Betrieb des Formenwerkzeuges hat sich herausgestellt, wenn eine thermische Isolierung des Formenwerkzeuges vorgenommen wird.

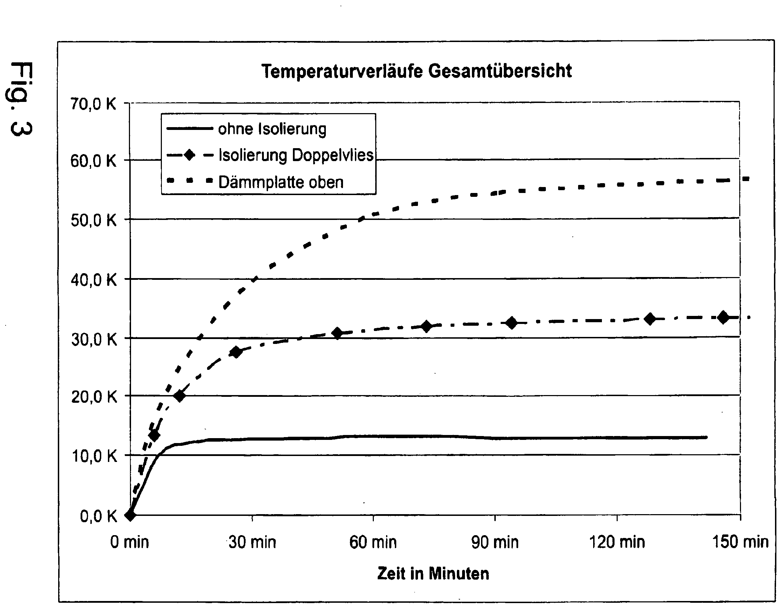

Bei der vorstehend beschriebenen einfachen Heizplatte sollte bei Raumtemperatur (ca. 25°C) eine Oberflächentemperatur von 82°C erreicht werden. Figur 3 zeigt die Temperaturverläufe der Heizplatte mit unterschiedlichen Isolierungen bei einer Flächenheizleistung von 200 W/m$^2$. Dargestellt wird die Temperaturdifferenz zur Umgebungstemperatur.

In Figur 3 wird der Einfluss der Isolierung sehr deutlich. Während ohne Isolierung lediglich eine Temperaturerhöhung von 12,9 K an der Formenoberfläche gemessen wurde, wird bei gleicher Flächenheizleistung mit einem aufgelegten Doppelvlies eine Temperaturerhöhung von 33,6 K gemessen. Bei einer zusätzlichen auf der Oberfläche aufliegenden Dämmplatte betrug die Temperaturerhöhung bei gleicher Flächenheizleistung 57,3 K.

Noch deutlicher fällt diese Temperaturerhöhung aus, wenn die Form vollständig gedämmt wird. In einem weiteren Versuch wurde die Heizleistung auf 100 W/m$^2$ halbiert die Heizform wurde auf der Unter- und der Oberseite mit einer 40 mm starken Dämmplatte isoliert. Dabei wurden an der Formenoberfläche Temperaturen gemessen, die 70 K über der Umgebungstemperatur lagen.

Diese Messungen zeigen, dass durch eine einfache Isolierung der Heizleistungsbedarf erheblich reduziert werden kann. Die Aufheizraten lagen in allen Fällen deutlich über den erforderlichen Aufheizraten, die bei Bauteilen aus faserverstärkten Epoxidharzen i. A. 10 K / Stunde nicht überschreiten sollten.

Diese Untersuchungen zeigen, dass der Dämmung besondere Beachtung geschenkt werden sollte. Insbesondere scheint es möglich zu sein, bei vorgegebener Heizleistung den Temperaturverlauf durch Hinzufügen oder Weglassen von Isoliermaterial gezielt, evtl. auch partiell, beeinflussen zu können. Dieses dürfte z.B. bei komplizierten Formengeometrien interessant werden, bei denen eine konstante Flächenheizung über der gesamten Formengeometrie ggf. nur schwierig zu realisieren ist.

Hinsichtlich der Anwendungsmöglichkeiten erfindungsgemäßer Formenwerkzeuges lässt sich folgendes aussagen:

Die Anwendungsmöglichkeiten der vorstehend beschriebenen beheizbaren Kunststoffformen liegen vorzugsweise im Bereichen, in denen großflächige Schalenbauteile mit einfacher Geometrie in kleineren bis mittleren Stückzahlen hergestellt werden und während oder nach der Formgebung in der Form beheizt werden sollen. Formen können dabei mit den bisher untersuchten Faser-Kunststoffsystemen Temperaturen bis ca. 100° C gewährleisten. Die Temperaturbeständigkeit wird dabei von den verwendeten Kunstharzsystemen eingeschränkt. Mit weiteren temperaturbeständigen Harzsystemen sind Wärmeformbeständigkeiten bis deutlich über 200° C möglich, ohne dass nennenswerte Prozessänderungen bei der Herstellung der Formen erfolgen müssten. Mit keramischen Matrixwerkstoffen könnten aber ggf. auch Formen mit wesentlich höherer Wärmeformbeständigkeit auf ähnliche Weise aufgebaut und beheizt werden.

Potentielle Bauteile, die in entsprechenden Formen deutlich wirtschaftlicher als bislang hergestellt werden könnten, sind insbesondere großflächige Faserverbundbauteile wie Tragflügel-, Rumpf- oder Leitwerkselemente im Flugzeugbau, Paneele für verschiedene Transportsysteme oder die Medizintechnik, Bootsrümpfe oder Windkraftflügel. Aber auch Kunststoffbauteile ohne Faserverstärkung lassen sich prinzipiell in entsprechenden beheizbaren Kunststoffformen herstellen.

So könnten große Tiefziehformen ebenso in der beschriebenen Weise aufgebaut sein wie z.B. Rotationssinterformen.

**Patentansprüche**

1. Formwerkzeug für die urformende oder umformende Formgebung von Bauteilen aus thermisch beeinflussbaren Werkstoffen, vorzugsweise aus Kunststoffen und insbesondere aus Faserverbundwerkstoffen,
   bei dem das Formwerkzeug eine Faserverbundstruktur und ein elektrisches Widerstandsheizelement aufweist,
   wobei in die Faserverbundstruktur des Formwerkzeuges nahe der formgebenden Oberfläche des Formwerkzeuges Kohlenstofffasern oder Kohlenstofffilamente in einer Kunststoffmatrix eingelagert sind,
   wobei die Kohlenstofffasern oder Kohlenstofffilamente in der Kunststoffmatrix nahe der formgebenden Oberfläche im wesentlichen die mechanischen Eigenschaften, insbesondere die Festigkeit, die Steifigkeit und/oder die Wärmedehnung, des Formwerkzeuges bestimmen **dadurch gekennzeichnet, dass**
   das elektrische Widerstandsheizelement derart verschaltet ist, dass zumindest einzelne Abschnitte des elektrischen Widerstandsheizelementes miteinander eine elektrische Parallelschaltung bilden,
   wobei die das elektrische Widerstandsheizelement bildende Anordnung in Form von biaxialen oder multiaxialen Geweben oder Gelegen aus Kohlenstofffasern oder Kohlenstofffilamenten ausgebildet ist
   und die das elektrische Widerstandsheizelement bildende Anordnung von Kohlenstofffasern oder Kohlenstofffilamenten teilweise oder gänzlich als Einheiten in Form von Gelegen, Geweben ausgebildet sind,
   wobei Einheiten endseits der Fasern oder der Einheiten elektrisch kontaktiert und als Parallelschaltung miteinander verschaltet sind.

2. Formwerkzeug gemäß Anspruch 1, **dadurch gekennzeichnet, dass** die Kohlenstofffasern oder Kohlenstofffilamente in der Kunststoffmatrix direkt angrenzend an die bauteilseitige Oberfläche des Formwerkzeuges eingelagert sind.

3. Formwerkzeug gemäß einem der vorstehenden Ansprüche, **dadurch gekennzeichnet, dass** die das elektrische Widerstandsheizelement bildende Anordnung von Kohlenstofffasern oder Kohlenstofffilamenten oder daraus gebildeten Einheiten im wesentlichen quasiisotrop ausgebildet sind.

4. Formwerkzeug einem der vorstehenden Ansprüche, **dadurch gekennzeichnet, dass** zwischen einzelnen Einheiten der das elektrische Widerstandsheizelement bildenden Anordnung von Kohlenstofffasern oder Kohlenstofffilamenten elektrisch nichtleitende Bereiche ausgebildet sind.

5. Formwerkzeug gemäß Anspruch 4, **dadurch gekennzeichnet, dass** die elektrisch nichtleitenden Bereiche innerhalb einer Ebene oder senkrecht zwischen übereinander angeordneten Ebenen eingefügt sind.

6. Formwerkzeug gemäß einem der vorstehenden Ansprüche, **dadurch gekennzeichnet, dass** die das elektrische Widerstandsheizelement bildende Anordnung von Kohlenstofffasern oder Kohlenstofffilamenten oder daraus gebildete Einheiten in der Kunststoffmatrix im wesentlichen die mechanischen Eigenschaften und die Wärmedehnung der gesamten Faserverbundstruktur bestimmt.

7. Formwerkzeug gemäß einem der vorstehenden Ansprüche, **dadurch gekennzeichnet, dass** die das elektrische Widerstandsheizelement bildende Anordnung von Kohlenstofffasern oder Kohlenstofffilamenten oder daraus gebildete Einheiten in der Kunststoffmatrix die abgegebene Heizleistung unmittelbar an der Oberfläche des zu formenden Bauteils erzeugt.

8. Formwerkzeug gemäß einem der vorstehenden Ansprüche, **dadurch gekennzeichnet, dass** die bauteilseitige Oberfläche des Formwerkzeuges durch eine Formendeckschicht gebildet ist, die die das elektrische Widerstandsheizelement beinhaltende Schicht bauteilseitig, vorzugsweise dünnschichtig abdeckt.

9. Formwerkzeug gemäß einem der vorstehenden Ansprüche, **dadurch gekennzeichnet, dass** auf der bauteilabgewandten Seite der das elektrische Widerstandsheizelement aufweisenden Schicht eine, vorzugsweise elektrisch isolierende Versteifungsschicht aufgebracht ist.

10. Formwerkzeug gemäß Anspruch 9, **dadurch gekennzeichnet, dass** die Versteifungsschicht einen Aufbau in Form einer stabilen Leichtbauschicht aufweist oder eines Sandwichaufbaus aufweist.

11. Formwerkzeug gemäß einem der vorstehenden Ansprüche, **dadurch gekennzeichnet, dass** zusätzliche, vorzugsweise elektrisch isolierende Zwischenschichten zwischen der das elektrische Widerstandsheizelement beinhaltenden Faserverbundschicht, der Formendeckschicht und/oder der Versteifungsschicht angeordnet sind.

12. Formwerkzeug gemäß Anspruch 11, **dadurch gekennzeichnet, dass** als zusätzliche Zwischenschicht eine Schicht aus einem vorzugsweise dünnen Glasfasergewebe in der Faserverbundstruktur angeordnet ist.

13. Formwerkzeug gemäß einem der vorstehenden Ansprüche, **dadurch gekennzeichnet, dass** als auf der bauteilabgewandten Seite der Versteifungsschicht angeordnete weitere Formendeckschicht eine Schicht mit Kohlenstofffasern vorsehbar ist, die in einer Kunststoffmatrix eingelagert sind.

14. Formwerkzeug gemäß Anspruch 13, **dadurch gekennzeichnet, dass** die Kohlenstofffasern der bauteilabgewandten Formendeckschicht elektrisch isoliert gegen die Kohlenstofffasern der bauteilzugewandten, das elektrische Widerstandsheizelement beinhaltenden Faserverbundschicht ist.

15. Formwerkzeug gemäß einem der vorstehenden Ansprüche, **dadurch gekennzeichnet, dass** die Ausrichtung von Kohlenstofffasern oder Kohlenstofffilamente oder der Einheiten aus Kohlenstofffasern oder Kohlenstofffilamenten versetzt und/oder verdreht zu anderen Kohlenstofffasern oder Kohlenstofffilamente oder der Einheiten der gleichen Faserverbundschicht ist.

16. Formwerkzeug gemäß einem der vorstehenden Ansprüche, **dadurch gekennzeichnet, dass** die elektrischen Heizelemente in Stromflussrichtung segmentiert sind und einzelne Segmente durch zusätzliche elektronische Bauelemente ganz oder teilweise überbrückbar sind, um den Stromfluss und die Heizleistung in dem entsprechenden Segment zu beeinflussen.

17. Formwerkzeug gemäß einem der vorstehenden Ansprüche, **dadurch gekennzeichnet, dass** die elektrischen Heizelemente in Stromflussrichtung segmentiert sind und die einzelnen Segmente eines Heizelementes eine Reihenschaltung bilden.

18. Formwerkzeug gemäß Anspruch 17, **dadurch gekennzeichnet, dass** die segmentierten elektrischen Heizelemente durch die Reihenschaltung auch bei großen Abmessungen des Formwerkzeuges insgesamt mit Kleinspannung betreibbar sind.

19. Formwerkzeug gemäß einem der vorstehenden Ansprüche, **dadurch gekennzeichnet, dass** einzelne stromführende und übereinander angeordnete Schichten der elektrischen Heizelemente in Dickenrichtung durch dünne isolierende Schichten derart gegeneinander isoliert sind, dass eine individuelle Segmenteinteilung durch Stapelung dünnschichtiger Heizelemente in Multilayertechnik erreichbar ist.

**20.** Formwerkzeug gemäß einem der vorstehenden Ansprüche, **dadurch gekennzeichnet, dass** durch zusätzliche dünne und lokal begrenzt eingebrachte elektrische Heizelemente der Stromfluss in dem Formwerkzeug lokal derart veränderbar ist, dass eine partielle Veränderung der Flächenheizleistung innerhalb der Fläche des Formwerkzeuges möglich ist.

**21.** Formwerkzeug gemäß einem der vorstehenden Ansprüche, **dadurch gekennzeichnet, dass** das Formwerkzeug mit Kanälen durchzogen ist, durch die Kühlluft oder andere gasförmige oder flüssige Kühlmedien hindurchgeleitet werden.

**Claims**

**1.** A moulding tool for original shaping moulding or transformational shaping moulding of components of thermally influencible materials, preferably plastics and in particular fibre composite materials, in which the moulding tool has a fibre composite structure and an electrical resistance heating element, wherein carbon fibres or carbon filaments are embedded in a plastic matrix in the fibre composite structure of the moulding tool near the shaping surface of the moulding tool, wherein the carbon fibres or carbon filaments in the plastic matrix near the shaping surface determine substantially the mechanical properties, in particular strength, rigidity and/or thermal expansion of the shaping tool, **characterised in that** the electrical resistance heating element is so connected that at least individual portions of the electrical resistance heating element form an electrical parallel circuit with each other, wherein the arrangement forming the electrical resistance heating element is in the form of biaxial or multiaxial woven fabrics or non-crimp fabrics of carbon fibres or carbon filaments and the arrangement of carbon fibres or carbon filaments that forms the electrical resistance heating element are partially or entirely units in the form of non-crimp fabrics, woven fabrics, wherein units at the end of the fibres or of the units are electrically contacted and are connected together in the form of a parallel circuit.

**2.** A moulding tool according to claim 1 **characterised in that** the carbon fibres or carbon filaments are incorporated in the plastic matrix in directly adjoining relationship with the component-side surface of the moulding tool.

**3.** A moulding tool according to one of the preceding claims **characterised in that** the arrangement of carbon fibres or carbon filaments that forms the electrical resistance heating element or units formed from same are of a quasi-isotropic nature.

**4.** A moulding tool according to one of the preceding claims **characterised in that** electrically non-conducting regions are provided between individual units of the arrangement of carbon fibres or carbon filaments that forms the electrical resistance heating element.

**5.** A moulding tool according to claim 4 **characterised in that** the electrically non-conducting regions are inserted within a plane or perpendicularly between mutually superposed planes.

**6.** A moulding tool according to one of the preceding claims **characterised in that** the arrangement of carbon fibres or carbon filaments that forms the electrical resistance heating element or units formed from same in the plastic matrix substantially determine the mechanical properties and the thermal expansion of the entire fibre composite structure.

**7.** A moulding tool according to one of the preceding claims **characterised in that** the arrangement of carbon fibres or carbon filaments that forms the electrical resistance heating element or units formed from same in the plastic matrix produces the delivered heating power directly at the surface of the component to be moulded.

**8.** A moulding tool according to one of the preceding claims **characterised in that** the component-side surface of the moulding tool is formed by a mould cover layer which covers the layer containing the electrical resistance heating element at the component side, preferably with a thin layer.

**9.** A moulding tool according to one of the preceding claims **characterised in that** a preferably electrically insulating reinforcing layer is applied on the side remote from the component of the layer having the electrical resistance heating element.

**10.** A moulding tool according to claim 9 **characterised in that** the reinforcing layer has a structure in the form of a stable lightweightconstruction layer or a sandwich structure.

**11.** A moulding tool according to one of the preceding claims **characterised in that** additional, preferably electrically insulating intermediate layers are arranged between the fibre composite layer including the electrical resistance heating element, the mould cover layer and/or the reinforcing layer.

**12.** A moulding tool according to claim 11 **characterised in that** a layer of a preferably thin glass fibre woven fabric is arranged in the fibre composite structure as the additional intermediate layer.

13. A moulding tool according to one of the preceding claims **characterised in that** a layer with carbon fibres which are incorporated in a plastic matrix can be provided as the further mould cover layer arranged on the side of the reinforcing layer, that is remote from the component.

14. A moulding tool according to claim 13 **characterised in that** the carbon fibres of the mould cover layer that is remote from the component are electrically insulated from the carbon fibres of the fibre composite layer which is towards the component and which contains the electrical resistance heating element.

15. A moulding tool according to one of the preceding claims **characterised in that** the orientation of carbon fibres or carbon filaments or of the units of carbon fibres or carbon filaments is displaced and/or rotated with respect to other carbon fibres or carbon filaments or the units of the same fibre composite layer.

16. A moulding tool according to one of the preceding claims **characterised in that** the electrical heating elements are segmented in the current flow direction and individual segments can be entirely or partially bridged over by additional electronic components to influence the current flow and the heating power in the corresponding segment.

17. A moulding tool according to one of the preceding claims **characterised in that** the electrical heating elements are segmented in the current flow direction and the individual segments of a heating element form a series circuit.

18. A moulding tool according to claim 17 **characterised in that** the segmented electrical heating elements are operable with a low voltage by the series circuit even when the moulding tool overall is of large dimensions.

19. A moulding tool according to one of the preceding claims **characterised in that** individual current-carrying mutually superposed layers of the electrical heating elements are insulated from each other in the thickness direction by thin insulating layers in such a way that an individual segment division can be achieved by stacking thin-layer heating elements using multi-layer technology.

20. A moulding tool according to one of the preceding claims **characterised in that** the current flow in the moulding tool can be locally changed by additional thin electrical heating elements which are introduced in locally limited fashion in such a way that a partial change in the area heating power within the surface of the moulding tool is possible.

21. A moulding tool according to one of the preceding claims **characterised in that** the moulding tool has passages passing through it, through which cooling air or other gaseous or liquid cooling media are passed.

## Revendications

1. Moule pour le modelage primaire ou secondaire de pièces constituées de matériaux influençables thermiquement, de préférence de plastiques et en particulier de substances composites à base de fibres, le moule présentant une structure composite à base de fibres et un élément de chauffage ohmique électrique, sachant que des fibres de carbone ou des filaments de carbone sont incorporés dans une matrice en plastique, dans la structure composite à base de fibres du moule, à proximité de la surface de façonnage de ce dernier, sachant que les fibres de carbone ou les filaments de carbone déterminent dans la matrice en plastique, à proximité de la surface de façonnage, essentiellement les propriétés mécaniques du moule, en particulier la résistance, la rigidité et/ou la dilatation thermique de ce dernier, **caractérisé en ce que** l'élément de chauffage ohmique électrique est câblé de telle manière qu'au moins certains segments de l'élément de chauffage ohmique électrique forment ensemble un circuit parallèle électrique, sachant que l'ensemble formant l'élément de chauffage ohmique électrique est réalisé sous la forme de tissus ou de nappes biaxiaux ou multiaxiaux constitués de fibres de carbone ou de filaments de carbone et que l'agencement de fibres de carbone ou de filaments de carbone, formant l'élément chauffant ohmique électrique, est réalisé en tout ou en partie comme unité sous la forme de tissus, de nappes, sachant que des unités sont contactées électriquement côté extrémité des fibres ou des unités et sont câblées les unes aux autres de manière à former un circuit électrique parallèle.

2. Moule selon la revendication 1, **caractérisé en ce que** les fibres de carbone ou les filaments de carbone dans la matrice en plastique sont incorporés de manière à jouxter directement la surface côté pièce du moule.

3. Moule selon l'une quelconque des revendications précédentes, **caractérisé en ce que** l'agencement de fibres de carbone ou de filaments de carbone, formant l'élément de chauffage ohmique électrique, ou les unités formées à partir de ces derniers sont réalisés de manière quasi-isotrope.

**4.** Moule selon l'une quelconque des revendications précédentes, **caractérisé en ce que** des zones non conductrices électriquement sont réalisées entre diverses unités de l'ensemble de fibres de carbone ou de filaments de carbone, formant l'élément de chauffage ohmique électrique.

**5.** Moule selon la revendication 4, **caractérisé en ce que** les zones non conductrices électriquement sont intégrées à l'intérieur d'un plan ou de manière perpendiculaire entre des plans superposés.

**6.** Moule selon l'une quelconque des revendications précédentes, **caractérisé en ce que** l'ensemble des fibres de carbone ou des filaments de carbone, formant l'élément de chauffage ohmique électrique, ou les unités formées à partir de ces derniers dans la matrice en plastique définissent essentiellement les propriétés mécaniques et la dilatation thermique de l'ensemble de la structure composite à base de fibres.

**7.** Moule selon l'une quelconque des revendications précédentes, **caractérisé en ce que** l'ensemble de fibres de carbone ou de filaments de carbone, formant l'élément de chauffage ohmique électrique, ou des unités formées à partir de ces derniers dans la matrice en plastique génèrent la puissance de chauffage fournie directement au niveau de la surface de la pièce à façonner.

**8.** Moule selon l'une quelconque des revendications précédentes, **caractérisé en ce que** la surface côté pièce du moule est formée par une couche de revêtement de moule, qui recouvre côté pièce, de préférence en une couche de faible épaisseur, la couche contenant l'élément de chauffage ohmique électrique.

**9.** Moule selon l'une quelconque des revendications précédentes, **caractérisé en ce qu'**une couche de raidissement, de préférence isolante électriquement, est appliquée sur le côté opposé à la pièce, de la couche présentant l'élément de chauffage ohmique électrique.

**10.** Moule selon la revendication 9, **caractérisé en ce que** la couche de raidissement présente une structure sous la forme d'une couche de construction légère stable ou d'une structure en sandwich.

**11.** Moule selon l'une quelconque des revendications précédentes, **caractérisé en ce que** des couches intermédiaires supplémentaires, de préférence isolantes électriquement, sont disposées entre la couche composite à base de fibres contenant l'élément de chauffage ohmique électrique, la couche de revêtement de moule et/ou la couche de raidissement.

**12.** Moule selon la revendication 11, **caractérisé en ce qu'**une couche formée à partir d'un tissu en fibres de verre de préférence de faible épaisseur est disposée en tant que couche intermédiaire supplémentaire dans la structure composite à base de fibres.

**13.** Moule selon l'une quelconque des revendications précédentes, **caractérisé en ce qu'**on peut prévoir en tant que couche de revêtement de moule supplémentaire disposée sur le côté de la couche de raidissement, opposé à la pièce, une couche dotée de fibres de carbone, laquelle couche est incorporée dans une matrice en plastique.

**14.** Moule selon la revendication 13, **caractérisé en ce que** les fibres de carbone de la couche de revêtement de moule opposée à la pièce sont isolées électriquement par rapport aux fibres de carbone de la couche composite à base de fibres tournée vers la pièce, contenant l'élément de chauffage ohmique électrique.

**15.** Moule selon l'une quelconque des revendications précédentes, **caractérisé en ce que** l'orientation des fibres de carbone ou des filaments de carbone ou des unités formées à partir des fibres de carbone ou des filaments de carbone est décalée et/ou pivotée par rapport aux autres fibres de carbone ou filaments de carbone ou aux unités de la même couche composite à base de fibres.

**16.** Moule selon l'une quelconque des revendications précédentes, **caractérisé en ce que** les éléments de chauffage électriques sont segmentés dans la direction du flux de courant, et **en ce que** divers segments sont pontés en tout ou en partie par des composants électroniques supplémentaires, afin d'influer sur le flux de courant et la puissance de chauffage dans le segment correspondant.

**17.** Moule selon l'une quelconque des revendications précédentes, **caractérisé en ce que** les éléments de chauffage électriques sont segmentés dans le sens du flux de courant, et **en ce que** les divers segments d'un élément de chauffage forment un circuit électrique en sérié.

**18.** Moule selon la revendication 17, **caractérisé en ce que** les éléments de chauffage électriques segmentés peuvent fonctionner globalement avec une faible tension même pour un moule présentant de grandes dimensions grâce au circuit électrique en série.

**19.** Moule selon l'une quelconque des revendications précédentes, **caractérisé en ce que** diverses couches traversées par le courant et superposées les unes sur les autres des éléments de chauffage électriques sont isolées dans le sens de l'épaisseur les unes des autres par des couches isolantes de faible épaisseur de telle manière qu'il est possible d'obtenir un sectionnement par segment- individuel en empilant des éléments de chauffage à couche de faible épaisseur selon une technique multicouche.

20. Moule selon l'une quelconque des revendications précédentes, **caractérisé en ce que** le flux de courant peut être modifié dans le moule localement grâce à des éléments de chauffage électriques supplémentaires de faible épaisseur et installés de manière localement limitée de telle manière qu'une modification partielle de la puissance de chauffage de surface est possible à l'intérieur de la surface du moule.

21. Moule selon l'une quelconque des revendications précédentes, **caractérisé en ce que** le moule est traversé de canaux, par lesquels l'air froid et d'autres milieux de refroidissement sous forme gazeuse ou liquide sont introduits.

Fig. 1

Fig. 2

Fig. 3

**EP 2 099 596 B2**

**IN DER BESCHREIBUNG AUFGEFÜHRTE DOKUMENTE**

**In der Beschreibung aufgeführte Patentdokumente**

- DE 102004042422 A1
- FR 2691400 A1
- EP 0218038 A1